# EUROPEAN PATENT APPLICATION

(11) **EP 4 742 702 A1**
(43) Date of publication of application: **13.05.2026**
(21) Application number: 25213742.7
(22) Date of filing: 05.11.2025
(51) Int. Cl.: H04W 4/02, H04W 4/40, H04W 4/44, H04W 4/46, H04W 4/80, H04W 40/20, H04W 88/04, H04W 88/06

(54) **SYSTEMS AND METHODS FOR VEHICLE-TO-EVERYTHING MESSAGE FORWARDING**

(30) Priority: 11.11.2024 IN 202441086700
(71) Applicant: Harman Becker Automotive Systems, Inc., Novi, MI 48377 (US)
(72) Inventor: JAIN, Rishu, 560056 Bangalore (IN); RADHAKRISHNAN, Vijay, 560043 Bangalore (IN)
(74) Representative: Rummler, Felix

(57) **Abstract**

Systems and methods are herein provided for V2X message forwarding. In one example, a method comprises a network receiving message data from one or more units via a long range interface; identifying, based on determined communication capabilities, a first subset of units capable of both long short range communication and a second subset of units capable of only long range communication; forwarding first message data from the second subset of units to one or more short range units via one or more first elected units of the first subset of units based on location; and forwarding second message data received from one or more second elected units of the first subset of units to the second subset of units, wherein the second message data comprises data of the one or more short range units received by the second elected units of the first subset of units based on location.

## Description

### CROSS REFERENCE TO RELATED APPLICATIONS

The present application claims priority to Indian Non-provisional Application No. 202441086700, entitled "SYSTEMS AND METHODS FOR VEHICLE-TO-EVERYTHING MESSAGE FORWARDING", and filed on November 11, 2024. The entire contents of the above-listed application is hereby incorporated by reference for all purposes.

### FIELD

The disclosure relates to vehicle communications, and in particular, to extending Vehicle-to-Everything (V2X) coverage by forwarding V2X messages between short-range capable vehicles and long-range capable vehicles.

### BACKGROUND

Vehicle-to-everything (V2X) systems are cooperative systems in which vehicles exchange information with other vehicles. V2X is a technology that enables communication and data exchange between vehicles and their surroundings, including other vehicles, infrastructure, pedestrians, and even the cloud, facilitating enhanced road safety, traffic efficiency, and personalized mobility experience. The V2X umbrella encompasses several technologies based on the communication channel that is leveraged: Vehicle-to-Vehicle (V2V) - vehicles communicating with one another, Vehicle-to-Infrastructure (V2I) - vehicles communicating with a road side infrastructure like a traffic light, Vehicle-to-Pedestrian (V2P) - vehicles communicating with mobile phones of pedestrians, Vehicle-to-Network (V2N) - vehicles communicating with an edge mobile network like Multi-access Edge Computing (MEC), etc.

Certain technologies under the V2X umbrella, such as Dedicated Short Range Communication or direct cellular V2X technologies like PC5 radio communications, are considered "short range" communication channels. Such short range communication channels may provide for direct communication over a short range interface. Other technologies under the V2X umbrella, such as V2N may allow vehicles and other units, like infrastructure units, to communicate (e.g., transmit and receive messages) via a cloud or other edge mobile network. Such technologies are considered "long range" communication channels. Some vehicles, infrastructure units, and other such entities may be equipped for only short range communication, some may be equipped for only long range communication, and some may be equipped for both short and long range communication.

V2X communication may be used to enhance driver safety with communication between nearby vehicles and dissemination of information to vehicles about a driving environment including vehicle traffic, pedestrian traffic, and the like. Further, messages may be transmitted between various entities. However, vehicles, infrastructure units, and other entities that are equipped for only short range communication may not communicate with vehicles and infrastructure units that are equipped for only long range communication, thus leaving a gap in communication in the driving environment. Further, a method for interoperation between short range capable entities and long range capable entities includes simply forwarding all short range communication messages received by entities equipped for both short and long range communication to the cloud for processing. This however introduces transmission of duplicate packages as multiple entities will send the same received messages, thus overloading the processing demands and increasing data traffic for the various entities.

### SUMMARY

In one or more embodiments, a system comprises a network configured for long range communication, one or more units configured for short range communication (SR units), one or more units configured for long range communication (LR units), and one or more units configured for both long and short range communication (LSR units). Methods are herein provided for message forwarding from the one or more LR units to the one or more SR units and from the one or more SR units to the one or more LR units. As an example, a method for Vehicle-to-Everything (V2X) communication of a network comprises: receiving one or more messages from one or more units via a long range interface; determining communication capabilities of each of the one or more units; identifying, based on the determined communication capabilities, a first subset of units capable of both long range communication via the long range interface and short range communication via a short range interface and a second subset of units capable of only long range communication via the long range interface;
identifying a region in which each of the one or more units is located; electing a collaborator unit corresponding to each identified region, wherein the collaborator unit elected for each identified region is selected from the first subset of units; sending a vehicle information request to each collaborator unit; receiving, from each collaborator unit, a vehicle information package of a corresponding region, wherein the vehicle information package comprises message data from one or more units capable of only short range communication; and transmitting the vehicle information package of each corresponding region to the second subset of units.

A complimentary method for an elected collaborator unit capable of both long and short range communications comprises receiving one or more messages via a short range interface from one or more units; receiving a vehicle information request from a network to which the selected unit is connected vi a long range interface; filtering the one or more messages to build a vehicle information package including message data of a subset of the one or more units comprising units capable of short range communication only located in the same region as the selected unit; and transmitting the vehicle information package to the network for message forwarding via the long range interface.

### BRIEF DESCRIPTION OF THE DRAWINGS

The disclosure may be better understood from reading the following description of non-limiting embodiments, with reference to the attached drawings, wherein below:
FIG. 1 shows an exemplary Vehicle-to-Everything (V2X) system, in accordance with one or more embodiments of the present disclosure;
FIG. 2 shows an example partial view of a vehicle cabin including an instrument panel, in accordance with one or more embodiments of the present disclosure;
FIG. 3 shows a block diagram of an example in-vehicle computing system of a vehicle configured to receive and generate V2X messages, in accordance with one or more embodiments of the present disclosure;
FIG. 4 shows a diagram illustrating the V2X system of FIG. 1, in accordance with one or more embodiments of the present disclosure;
FIG. 5 shows a flowchart illustrating a method for V2X message forwarding of a vehicle information package of short range communication capable entities to long range communication capable entities, in accordance with one or more embodiments of the present disclosure;
FIG. 6 shows a flowchart illustrating a method for generating a vehicle information package, in accordance with one or more embodiments of the present disclosure;
FIG. 7 shows a flowchart illustrating a second method for generating a message package of long range communication capable entities, in accordance with one or more embodiments of the present disclosure;
FIG. 8 shows a diagram illustrating a V2X message forwarding scenario, in accordance with one or more embodiments of the present disclosure.
FIG. 9 shows a diagram illustrating message transfer between vehicles and a network, in accordance with one or more embodiments of the present disclosure; and
FIG. 10 shows a diagram illustrating message transfer between a network and elected collaborator vehicle(s), in accordance with one or more embodiments of the present disclosure.

### DETAILED DESCRIPTION

The following description relates to systems and methods for Vehicle-to-Everything (V2X) communication, and in particular, to systems and methods for increasing V2X communication coverage by transfer of messages between V2X capable entities. As described above, V2X is a technology that enables communication and data exchange between vehicles and their surroundings, including other vehicles, infrastructure, pedestrians, and even the cloud, facilitating enhanced road safety, traffic efficiency, and personalized mobility experience. The V2X umbrella encompasses several technologies based on the communication channel that is leveraged: Vehicle-to-Vehicle (V2V) - vehicles communicating with one another, Vehicle-to-Infrastructure (V2I) - vehicles communicating with a road side infrastructure like a traffic light, Vehicle-to-Pedestrian (V2P) - vehicles communicating with mobile phones of pedestrians, Vehicle-to-Network (V2N) - vehicles communicating with an edge mobile network like Multi-access Edge Computing (MEC), etc.

Certain technologies under the V2X umbrella are considered "short range" communication channels. Such short range communication channels may provide for direct communication over a short range interface. For example, the vehicles, infrastructure, and mobile devices used for V2X communication may be equipped with radio technologies, such as Dedicated Short Range Communication (DSRC) and/or Cellular V2X (CV2X) radio technologies, which may allow them to directly communicate with each other, such as via sidelink connections. Sidelink connections may have limited range, which may implicitly impact the nature of possible localization in the system. V2X messages, in various modes between various entities, may be broadcasted over sidelink connections, which may be received by various vehicles and/or service stations in a coverage area, and may be processed by each of the vehicles and/or service stations in implementing various V2X use cases.

Other technologies under the V2X umbrella, such as V2N may allow vehicles and other units, like infrastructure units, to communicate (e.g., transmit and receive messages) via a cloud or other edge mobile network, for example over a Uu or other long range interface. Such technologies are considered "long range" communication channels.

A V2X application installed on a device, for example a computing device, may configure the device to send messages and receive messages transmitted automatically from one or more vehicles or other entities according to the available V2X communication channels (e.g., short range or long range). The V2X application may be responsible for handling encoding and/or decoding of V2X standards-compliant messages and for implementing V2X networking standards and related protocols for transporting messages (e.g., over a DSRC radio interface or over a Uu interface). In addition, the V2X application may implement V2X security components which comply formats for security credentials such as certificates, and may implement protocols and/or algorithms for secure signing and verification of V2X messages. In particular, a message may be generated in accordance with one or more standards, such as SAE Surface Vehicle Standards J2735 and/or J3161, IEEE standards 1609.2 and 1609.3, or a relevant regional standard. The message may include information about a location of the entity, such as a latitude and longitude of the device. In some examples, the message may also include information about speed, direction of travel, fuel type, and more.

Some vehicles, infrastructure units, and other such entities may be equipped for only short range communication (dubbed herein as "SR units"), some may be equipped for only long range communication (dubbed herein as "LR units"), and some may be equipped for both short and long range communication (dubbed herein as "LSR units"). SR units may communicate (e.g., transmit and receive messages) with other entities capable of short range communications, such as other SR units and LSR units. Similarly, LR units may communicate (e.g., transmit and receive messages) with a network (e.g., a cloud computing network), which may communicate with other entities capable of long range communication, including both other LR units and LSR units. However, the SR units may not communicate with the LR units on their own. Thus, there is a gap in V2X communication coverage in any given environment.

This gap in V2X communication is feasibly bridged by forwarding messages from short range units to long range units via the network and the long and short range units and vice versa. However, doing so may flood the cloud and the receiving entities with duplicate messages as multiple entities may transmit and receive the same messages, thereby overloading the server and increasing the processing demands of the computing devices within the individual entities.

To address the gap in V2X communication coverage while mitigating transmission of duplicate messages, systems and methods are herein proposed for V2X message transfer between V2X capable units. In particular to transfer messages from SR units to LR units, a V2X application of a network may determine communication capabilities of entities from which it receives messages via long range V2X communication, including both LR units and LSR units. The network may elect one of the LSR units as a collaborator unit for each geographic region in reach of the network. The network may then send a vehicle information request to each collaborator unit. Each collaborator unit, upon receiving the vehicle information request, may filter its received messages to determine messages from SR units within the region matching the collaborator unit to build a relevant message package. The message package may be transmitted back to the network, which in turn may transmit the message package to the LR units in the corresponding region.

Similarly, to transfer messages from LR units to SR units, messages received at the network may be filtered to separate messages from LR units and LSR units as described. Messages from LRs within a given geographic region may be compiled into a message package and transmitted to an elected LSR unit within that geographic region, which in turn may transmit the message package to SR units via a short range interface.

By filtering entities by available communication protocols and geographic region, messages from SR units may be transmitted to LR units, and vice versa. Further, message forwarding as herein disclosed may mitigate duplicate messages by way of electing a single LSR unit (e.g., the collaborator unit) within each of a plurality of geographic regions and then transmitting message packages to other units within each given geographic region.

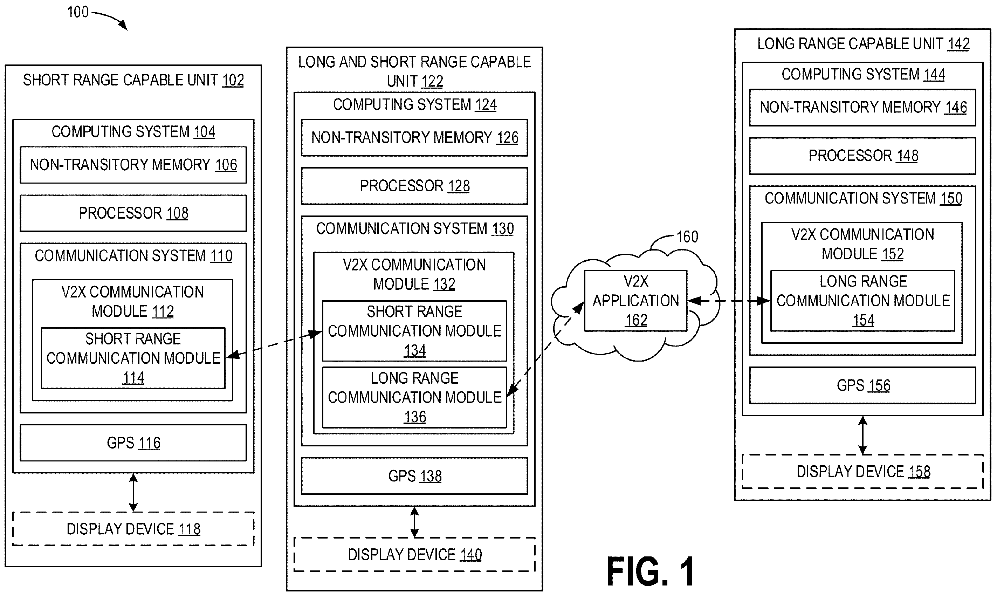

FIG. 1 shows a V2X ecosystem 100, including an SR unit 102, an LSR unit 122, an LR unit 142, and a network 160. It should be appreciated that while one SR unit 102, one LSR unit 122, and one LR unit 142 are shown in FIG. 1 and described herein, these are examples of available units in the V2X ecosystem 100 and the V2X ecosystem 100 may comprise one or more short range capable units, one or more long and short range capable units, and one or more long range capable units as well as the network 160.

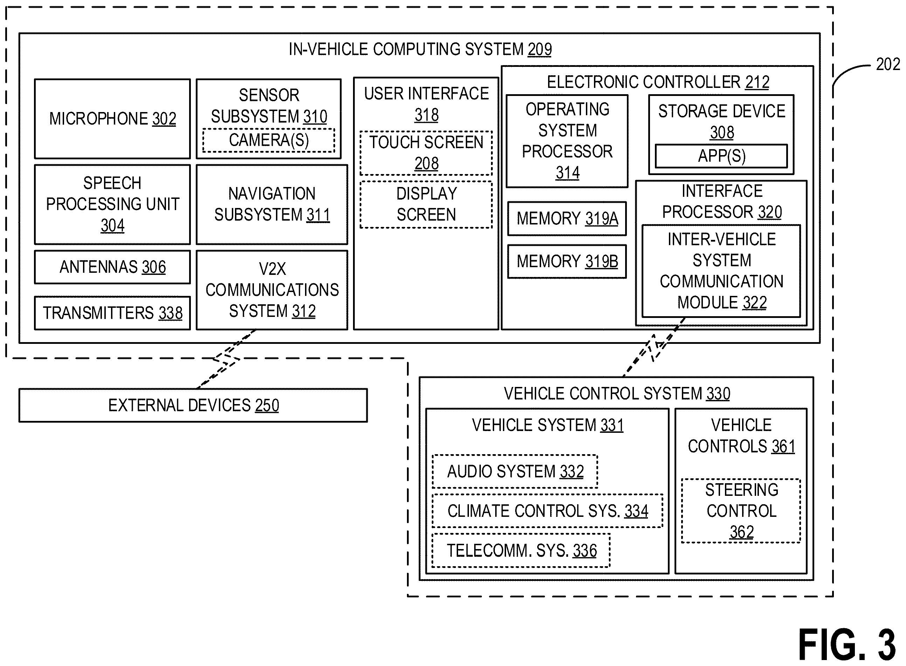

The SR unit 102, LSR unit 122, and LR unit 142 may be any of a vehicle, an infrastructure unit, a mobile device such as a pedestrian smart phone, or the like. Each of the SR unit 102, the LSR unit 122, and the LR unit 142 may include a computing system configured for V2X messaging. For example, the SR unit 102 may comprise a first computing system 104, the LSR unit 122 may comprise a second computing system 124, and the LR unit 142 may comprise a third computing system 144. When the SR unit 102, the LSR unit 122, and/or the LR unit 142 is a vehicle, the corresponding computing system may be a vehicle computing system. An exemplary vehicle computing system in such an example is depicted with respect to FIG. 3. Messages may be transmitted between the first, second, and third computing systems 104, 124, and 144 according to available V2X modes of communication for that unit, as will be herein described.

As an example, first computing system 104 of SR unit 102 may include one or more processors 108 configured to execute machine readable instructions stored in non-transitory memory 106. Similarly, the second computing system 124 of LSR unit 122 may include one or more processors 128 configured to execute machine readable instructions stored in non-transitory memory 126 and the third computing system 144 of LR unit 142 may include one or more processors 148 configured to execute machine readable instructions stored in non-transitory memory 146. Memory 106 and other memory referred to herein may include one or more data storage structures, such as optical memory devices, magnetic memory devices, or solid-state memory devices, for storing programs and routines executed by processor(s) 108 to carry out various functionalities disclosed herein. Memory 106 may include any desired type of volatile and/or non-volatile memory such as, for example, static random access memory (SRAM), dynamic random access memory (DRAM), flash memory, read-only memory (ROM), etc.

Processor(s) 108, and other processors referred to herein, may be any suitable processor, processing unit, or microprocessor, for example. Processor(s) 108 may be a multiprocessor system, and thus may include one or more additional processors that are identical or similar to each other and that are communicatively coupled via an interconnection bus. Processor(s) 108 may be single core or multi-core, and the programs executed thereon may be configured for parallel or distributed processing. In some embodiments, processor(s) 10 may optionally include individual components that are distributed throughout two or more devices, which may be remotely located and/or configured for coordinated processing. In some embodiments, one or more aspects of processor(s) 108 may be virtualized and executed by remotely-accessible networked computing devices configured in a cloud computing configuration.

Each computing system within the V2X ecosystem 100 may include a V2X communication system comprising a communication module with the available communication modes. For example, The SR unit 102 may comprise a communication system 110 with a V2X communication module 112 comprising a short range communication module 114. As described above, the short range communication module 114 may be configured to transmit and receive V2X messages (e.g., Basic Safety Messages (BSMs), traveler information messages (TIMs), or the like) over a short range interface, such as PC5 radio. The LSR unit 122 may comprise a communication system 130 with a V2X communication module 132 comprising a short range communication module 134 and a long range communication module 136. The short range communication module 134 may be configured for transmission of messages over a short range interface like PC5 radio and the long range communication module 136 may be configured for transmission over a long range interface, such as Uu. The LR unit 142 may comprise a communication system 150 with a V2X communication module 152 comprising a long range communication module 154. The long range communication module 154 may be configured for transmission of V2X messages over a long range interface, such as Uu.

The short range communication module 114 of the SR unit 102 may communicate with the short range communication module 134 of the LSR unit 122 via the short range interface. In this way, via short range communication modules, vehicles, infrastructure units, and the like may communicate directly with each other. In some examples, the short range communication modules may communicate with other short range communication modules within a predefined range, for example 1 kilometer. For example, the short range communication module 114 of the SR unit 102 may broadcast a message over the short range interface and the short range communication module 134 of the LSR unit 122, when the LSR unit 122 is within range of the SR unit 102, may receive the broadcasted message. In some examples, any short range communication module of any short range capable unit (e.g., SR or LSR units) may receive a broadcasted message when within range of the

The long range communication module 136 of the LSR unit 122 and the long range communication module 154 of the LR unit 142 may both communicate with a V2X application 162 of the network 160. The V2X application 162 may include instructions stored in memory for receiving, transmitting, and processing V2X messages, as well as to select LSR units for various regions as collaborators, as will be herein described. The V2X application 162 of the network 160 may be configured for V2N (e.g., long range) communication with entities capable of long range communication, including the LSR unit 122 and the LR unit 142, over the long range interface. As such, the long range communication module 136 and the long range communication module 154 may be configured for vehicle-to-network-to-vehicle (e.g., V2N2V) type communication, whereby, as a non-limiting example, the LSR unit 122 may transmit a V2X message to the V2X application 162 of the network 160, which in turn may transmit the message to the LR unit 142.

In some examples, the long range communication modules herein described, including the V2X application of the network may be configured for unicast data transmission. For example, the network may transmit messages to designated single receivers. Similarly, vehicles or other units may transmit messages to the network, wherein the network is the single receiver of the message. Conversely, the short range communication modules herein described may be configured for broadcast data transmission, wherein a message is broadcasted for reception by any unit within range of the interface, which may be for example 1 km.

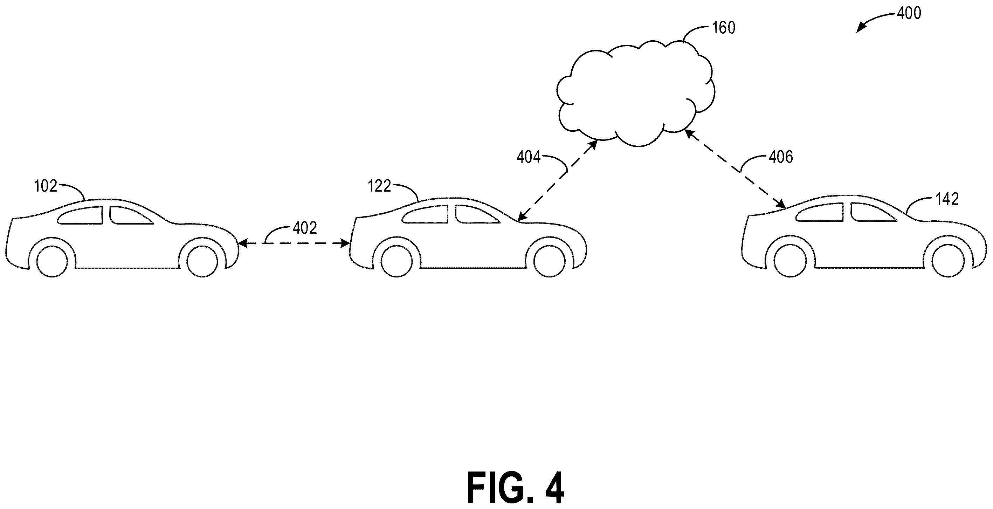

Turning briefly to FIG. 4, an exemplary communication scenario 400 for the V2X ecosystem 100 is shown. In the communication scenario 400, the SR unit 102 is a first vehicle, the LSR unit 122 is a second vehicle, and the LR unit 142 is a third vehicle. Each of the first, second, and third vehicles may be positioned within the same geographic region, for example may be driving along the same road.

The SR unit 102 may communicate with the LSR unit 122 via a short range interface 402. The short range interface 402 may be a PC5 radio interface or other direct C-V2X interface or DSRC interface with a predefined range, in some examples. Thus, the SR unit 102 may communicate with the LSR unit 122 when the LSR unit 122 is within the predefined range of the PC5 radio interface with respect to the SR unit 102.

The LSR unit 122 may additionally communicate with the network 160 via a first long range interface 404. The first long range interface 404 may be a Uu or other V2N communication interface. Similarly, the LR unit 142 may communicate with the network 160 via a second long range interface 406. The first and second long range interfaces 404, 406 may be the same type of long range interface, in some examples, or may be different types of long range interfaces, in other examples. In this way, via the network 160 and the respective long range interfaces, the LSR unit 122 and the LR unit 142 may transmit and receive messages to and from one another.

As will be herein disclosed, messages from the SR unit 102 may be forwarded to the LR unit 142 via the LSR unit 122 and the network 160 when the network 160 elects the LSR unit 122 as a collaborator for the geographic region in which the entities are positioned. Similarly, messages from the LR unit 142 may be forwarded to the SR unit 102 via the network 160 and the LSR unit 122. In this way, V2X coverage may be extended by transferring messages sent over different interface types.

While not specifically shown in FIG. 1, each of the SR unit 102, the LSR unit 122, and the LR unit 142 may include a small cell that includes a SIM card of a Telematics Control Unit (TCU) of a vehicle used for enhanced emergency (e.g., 9-1-1) services. In various embodiments, each small cell may be a femtocell included within the given unit (e.g., vehicle or infrastructure unit) which may have greater coverage with less signal loss.

Additionally, each computing system herein described may further include a global positioning (GPS) system. For example, the first computing system 104 of the SR unit 102 may comprise a GPS 116, the second computing system 124 of the LSR unit 122 may comprise a GPS 138, and the third computing system 144 of the LR unit 142 may comprise a GPS 156. Each of the GPSs herein described may be included in a navigational guidance system when the unit is a vehicle, or may be integrated elsewhere or as a standalone system when the unit is an infrastructure unit. Each GPS may be used by the respective computing system to determine a location of the unit. In some examples, the unit may be a stationary entity, such as a traffic light, and in other examples the unit may be mobile, such as a vehicle. The location determined by the GPS may be provided in latitude and longitude, in some examples. The data of the current location of the unit may be included in a V2X message transmitted by the communication system of the unit, thus a receiving communication system may identify the unit's location and derive their geographic region.

As will be herein described, the geographic region that is derived from a unit's location (e.g., latitude and longitude coordinates) may be assigned to a specific code (e.g., a Geohash code) representing a region of the location of the unit. For example, a relatively large geographic space may be conceptually partitioned into a grid and each grid quadrant, or Geohash, is assigned a different code. Based on the unit's location, in Geohash to which the unit resides may be determined. It should be understood however, that other systems for deriving a region of the unit's location may be used without departing from the scope of this disclosure.

Each computing system may be operably coupled to a display device, in some examples. For example, the first computing system 104 of the SR unit 102 may be optionally operably coupled to display device 118, the second computing system 124 of the LSR unit 122 may be optionally operably coupled to display device 140, and the third computing system 144 of the LR unit 142 may be optionally operably coupled to display device 158. As an example, when a unit is a vehicle, the display device thereof may be included in an infotainment head unit and may be configured to display alerts responsive to incoming V2X messages (e.g., Time-to-Collision alerts, etc.), navigation information, entertainment information, and the like. Similarly, when a unit is a mobile device of a pedestrian, the display device may be a display screen formed with the device and may display various similar alerts. In some examples, when a unit is an infrastructure unit such as a traffic light, no display device may be included. In other examples, when a unit is an infrastructure unit such as a refueling station, display devices may be included therein to display various information to users.

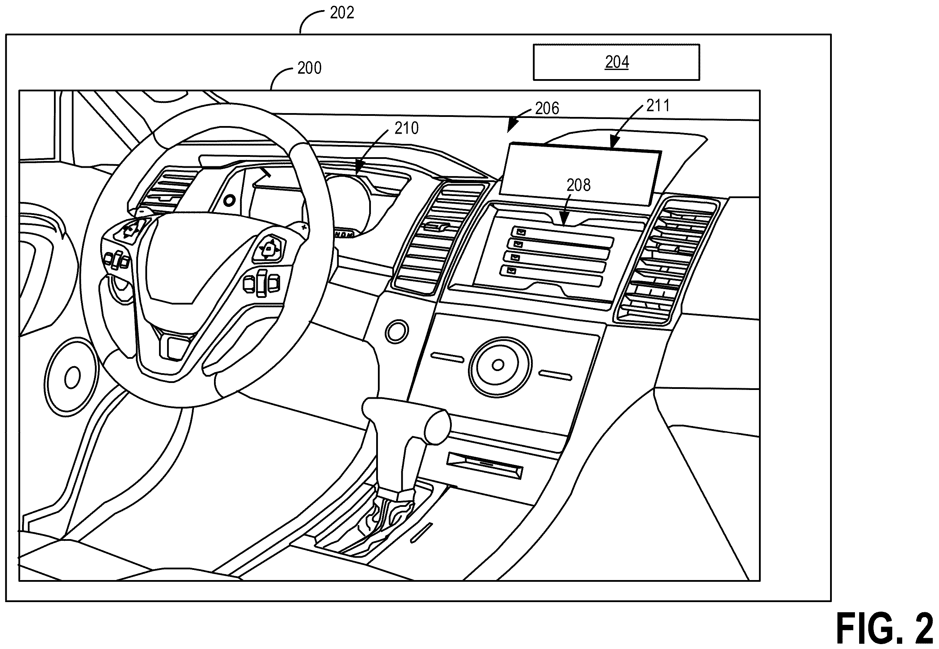

FIG. 2 shows an example partial view of an interior of a cabin 200 of a vehicle 202, in which a driver and/or one or more passengers may be seated. Vehicle 202 may be a non-limiting example of one or more of the SR unit 102, the LSR unit 122, and the LR unit 142 described above.

Vehicle 202 of FIG. 2 may be a motor vehicle including drive wheels (not shown) and a power source 204 configured to provide torque to the drive wheels, such as an internal combustion engine and/or battery. Vehicle 202 may be a road automobile, among other types of vehicles. In some examples, vehicle 202 may include a hybrid propulsion system including an energy conversion device operably to absorb energy from vehicle motion and/or the engine and convert the absorbed energy to an energy form suitable for storage by an energy storage device. Vehicle 202 may be a fully electric vehicle in some examples, incorporating fuel cells, solar energy capturing elements, and/or other energy storage systems for powering the vehicle.

As shown, the vehicle 202 may include an instrument panel 206 with various displays and controls accessible to a human driver (also referred to as the user and/or occupant) of vehicle 202. For example, instrument panel 206 may include a touch screen208 of an in-vehicle computing system (e.g., computing system 104, computing system 124, or computing system 144 of FIG. 1) and an instrument cluster 210. Touch screen 208 may receive user input to the in-vehicle computing system for controlling visual display output, user preferences, control parameter selection, and so on. While the example system shown in FIG. 2 includes controls that may be performed via a user interface of the in-vehicle computing system, such as touch screen 208, without a separate control panel, in other embodiments, the vehicle may include additional control panels. In some embodiments, one or more hardware elements of in-vehicle computing system 209, such as touch screen 208, a display screen 211 (e.g. display device 118, display device 140, or display device 158), various control dials, knobs and buttons, memory, processor(s), and any interface elements (e.g., connectors or ports) may form an integrated head unit that is installed in instrument panel 206 of the vehicle. The head unit may be fixedly or removably attached in instrument panel 206. In additional or alternative embodiments, one or more hardware elements of in-vehicle computing system 209 may be modular and may be installed in multiple locations of the vehicle.

During operation of vehicle 202, the in-vehicle computing system may be configured to receive electronic signals from the various sensors of the vehicle 202, in some examples. Additionally, the in-vehicle computing system may be configured to generate and transmit one or more messages, as V2X communications, in accordance with SAE Surface Vehicle Standard J2735 and/or other related/supported standards of a particular region of vehicle 202, as described above. The messages may be transmitted and received based on the communication capabilities of the vehicle 202, as will be further described below. In some examples, content of received messages may initiate display of a notification on the display screen 211.

FIG. 3 shows a block diagram of an in-vehicle computing system 209 integrated inside vehicle 202, where in-vehicle computing system 209 may be a non-limiting example of one of the computing systems (e.g., computing system 104, computing system 124, and computing system 144) of FIG. 1. In-vehicle computing system 209 may be referred to herein as a controller and/or electronic controller in some examples. In-vehicle computing system 209 may perform one or more of the methods described herein in some embodiments. In-vehicle computing system 209 may include, or be coupled to, various vehicle systems, sub-systems, hardware components, as well as software applications and systems that are integrated in, or integratable into, vehicle 202.

In-vehicle computing system 209 may include one or more processors including an operating system processor 314 and an interface processor 320. Operating system processor 314 may execute an operating system on in-vehicle computing system 209, and control input/output, display, and other operations of in-vehicle computing system 209. Interface processor 320 may interface with a vehicle control system 330 via an inter-vehicle system communication module 322.

Inter-vehicle system communication module 322 may output data to one or more other vehicle systems 331 and/or one or more other vehicle control elements 361, while also receiving data input from other vehicle systems 331 and other vehicle control elements 361, e.g., by way of vehicle control system 330. When outputting data, inter-vehicle system communication module 322 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as GPS sensors, and so on), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle), and so on. For example, in-vehicle computing system 209 may retrieve from the engine CAN bus the current speed of the vehicle estimated by the wheel sensors, a power state of the vehicle via a battery and/or power distribution system of the vehicle, an ignition state of the vehicle, a condition of one or more air bags of the vehicle, a condition of hazard lights of the vehicle, a condition of the power source 204 (shown by FIG. 2) of the vehicle, and so on. In addition, other interfacing means such as Ethernet may be used as well without departing from the scope of this disclosure.

A storage device 308 may be included in in-vehicle computing system 209 to store data such as instructions executable by operating system processor 314 and/or interface processor 320 in non-volatile form. Storage device 308 may store application data to enable in-vehicle computing system 209 to run an application for connecting to a cloud-based server and/or collecting information for transmission to the cloud-based server. The application may retrieve information gathered by vehicle systems/sensors, input devices (e.g., a user interface 318), data stored in one or more storage devices, such as a volatile memory 319A or a non-volatile memory 319B, devices in communication with the in-vehicle computing system, and so on. In-vehicle computing system 209 may further include a volatile memory 319A. Volatile memory 319A may be random access memory (RAM). Non-transitory storage devices, such as non-volatile storage device 308 and/or non-volatile memory 319B (e.g., non-transitory memory), may store instructions and/or code that, when executed by a processor (e.g., operating system processor 314 and/or interface processor 320), controls in-vehicle computing system 209 to perform one or more of the actions described in the disclosure.

A microphone 302 may be included in in-vehicle computing system 209 to receive voice commands from a user, to measure ambient noise in the vehicle, and so on. A speech processing unit 304 may process voice commands, such as the voice commands received from microphone 302. In some embodiments, in-vehicle computing system 209 may also be able to receive voice commands and sample ambient vehicle noise using a microphone included in an audio system 332 of the vehicle.

One or more additional sensors may be included in a sensor subsystem 310 of in-vehicle computing system 209. For example, sensor subsystem 310 may include a camera, such as a rear view camera for assisting a user in parking the vehicle and/or a cabin camera for identifying a user (e.g., using facial recognition and/or user gestures). Sensor subsystem 310 of in-vehicle computing system 209 may communicate with and receive inputs from various vehicle sensors and may further receive user inputs. For example, the inputs received by sensor subsystem 310 may include transmission gear position, transmission clutch position, gas pedal input, brake input, transmission selector position, vehicle speed, engine speed, mass airflow through the engine, ambient temperature, intake air temperature, and so on, as well as inputs from climate control system sensors (such as heat transfer fluid temperature, antifreeze temperature, fan speed, passenger compartment temperature, desired passenger compartment temperature, ambient humidity, and so on), an audio sensor detecting voice commands issued by a user, a fob sensor receiving commands from and optionally tracking the geographic location/proximity of a fob of the vehicle, and so on.

While certain vehicle system sensors may communicate with sensor subsystem 310 alone, other sensors may communicate with both sensor subsystem 310 and vehicle control system 330, or may communicate with sensor subsystem 310 indirectly via vehicle control system 330. A navigation subsystem 311 of in-vehicle computing system 209 may generate, transmit, receive, and/or process navigation information such as location information (e.g., via a GPS sensor and/or other sensors from sensor subsystem 310), route guidance, traffic information, point-of-interest (POI) identification, and/or provide other navigational services for the driver.

A V2X communications system 312 of in-vehicle computing system 209 may be coupleable to and/or communicate with one or more external devices 250 located external to vehicle 202. V2X communications system 312 may be the same as or similar to one or more of communication system 110, communication system 130, and communication system 150 of FIG. 1. The V2X communication system is in electronic communication with the electronic controller 212 of the vehicle 202 and may be commanded by the electronic controller 212 to generate and transmit V2X communications, similar to the examples described above. As one example, the electronic controller 212 may command the V2X communications system 312 to generate and transmit one or more messages to one or more external devices 250. The external devices 250 may include other vehicles, fuel providers (e.g., donor vehicles, refuel stations, etc.), RSUs arranged along roadways, and so on. The V2X communications system 312 may communicate wirelessly with the external devices 250 via a communication module, such as V2X communication module 112 of FIG. 1 according to the available communication modes of the vehicle 202. The one or more external devices 250 may be equipped with the same communication modes as those of the vehicle 202 such that the messages may be transmitted over a given interface.

For example, when the vehicle 202 is an SR unit, the messages may be transmitted and received via a short range interface, when the vehicle 202 is an LSR unit, the messages may be transmitted and received via either a short range interface or a long range interface, and when the vehicle 202 is an LR unit, the messages may be transmitted and received via a long range interface. As herein described, messages may be transmitted and received to other vehicles, infrastructure units (e.g., traffic lights, fuel providers, and the like), pedestrian mobile devices, and the like who share the available communication capabilities. For example, SR units may transmit and receive messages to and from other SR units and LSR units, LSR units may transmit and receive messages to and from SR units, other LSR units, and LR units via a network, and LR units may transmit and receive messages to and from other LR units and LSR units via the network. In some examples, as is herein described, when the vehicle 202 is an LSR unit, it may be configured for message forwarding to allow for communication between units that do not share the same communication capabilities (e.g., between SR units and LR units).

Vehicle control system 330 may include controls for controlling aspects of various vehicle systems 331 involved in different in-vehicle functions. These may include, for example, controlling aspects of vehicle audio system 332, aspects of a climate control system 334, aspects of a telecommunication system 336, and so on.

Vehicle control system 330 may also include controls for adjusting the settings of various vehicle control elements 361 (or vehicle controls, or vehicle system control elements) related to the engine and/or auxiliary elements within the cabin of the vehicle, such as one or more steering wheel controls 362 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 361 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system.

In-vehicle computing system 209 may further include one or more antennas 306. The in-vehicle computing system may obtain broadband wireless internet access via antennas 306, and may further receive broadcast signals such as radio, television, weather, traffic, and the like. In some examples, one or more antennas may be included with the V2X communications system 312 and may be configured to receive V2X communications from vehicles external to the vehicle 202, from RSUs, and/or from fuel providers (e.g., service stations, donor vehicles, etc.). In-vehicle computing system 209 may receive positioning signals such as GPS signals via antennas 306. The in-vehicle computing system may also receive wireless commands via radio frequency (RF) such as via antennas 306 or via infrared or other means through appropriate receiving devices. In some embodiments, antenna 306 may be included as part of audio system 332 or telecommunication system 336. Additionally, antenna 306 may provide AM/FM radio signals to external devices 250, in some examples.

The vehicle 202 further includes one or more transmitters 338. In some examples, one or more of the transmitters 338 may be integrated together with one or more of the antennas 306 to form one or more transceivers configured to generate and transmit V2X communications, and receive and process V2X communications, through V2X communications system 312.

One or more elements of in-vehicle computing system 209 may be controlled by a user via user interface 318. User interface 318 may include a graphical user interface presented on a touch screen, such as touch screen 208 and/or display screen 211 of FIG. 2, and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system 209 via user interface 318. In addition to receiving a user's vehicle setting preferences on user interface 318, vehicle settings selected by in-vehicle control system 330 may be displayed to a user on user interface 318. Notifications and other messages (e.g., received messages), as well as navigational assistance, may be displayed to the user on a display of the user interface. User preferences/information and/or responses to presented messages may be performed via user input to the user interface.

Although the electronic controller 212 is shown including the operating system processor 314, memory 319A, memory 319B, and so on, in some embodiments the electronic controller 212 may include a different number and/or configuration of components. For example, the electronic controller 212 may additionally be integrated with the one or more antennas 306, the one or more transmitters 338, and so on.

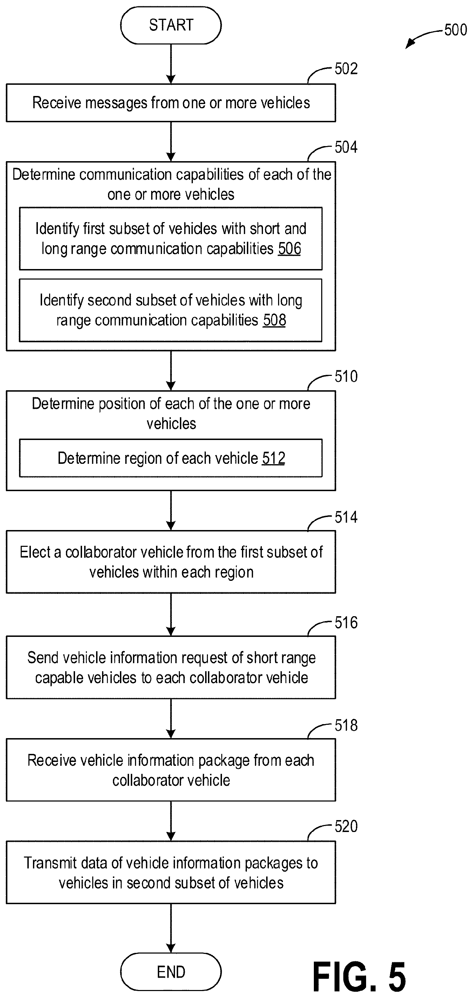

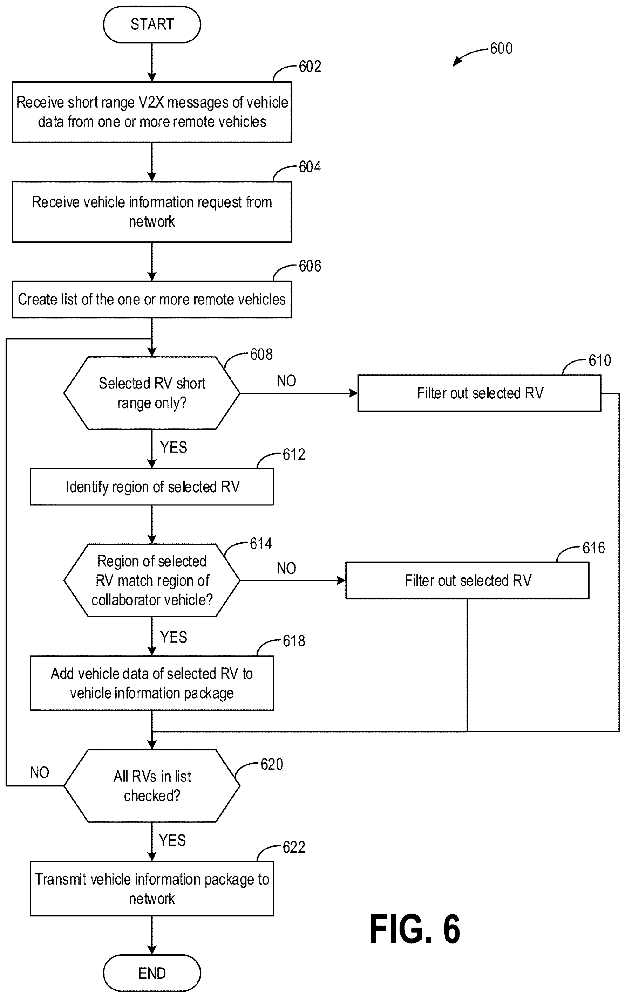

Turning now to FIGS. 5 and 6, flowcharts illustrating methods for forwarding V2X messages from SR units to LR units is shown. As described above, entities herein described, including SR units, LSR units, and LR units may be vehicles, infrastructure units, mobile devices, or the like. FIG. 5 specifically depicts a method for a network and FIG. 6 specifically depicts a method for an LSR unit designated as a collaborator, though it should be understood that the methods may be taken together to form a single scenario for forwarding V2X messages from SR units to LR units.

FIG. 5 shows a flowchart illustrating a method 500 for forwarding V2X messages by a network, such as a cloud computing network. The method 500 may be executed by a V2X communication application, such as V2X application 162 of network 160 described with respect to FIG. 1, for example based on instructions stored in memory thereof. The V2X application 162 may be in communication with one or more remote devices, including LSR units and LR units, via long range interface(s). Further, it should be understood that while the SR units, LSR units and LR units are herein described as vehicles, other types of V2X capable units are possible without departing from the scope of this disclosure.

At 502, method 500 includes receiving messages from one or more vehicles. The one or more vehicles may be vehicles capable of long range communication, such as LR units and LSR units. The messages may be received by the network via the long range interface (e.g., via V2N). Each message may include information about a location of the transmitting vehicle, such as a latitude and longitude of the vehicle and the available communication modes (e.g., interface information) thereof. In some examples, the message may also include information about speed, direction of travel, fuel type, and more. The V2X application of the network may be configured to decode the messages received from the one or more vehicles in order to extract information from the messages.

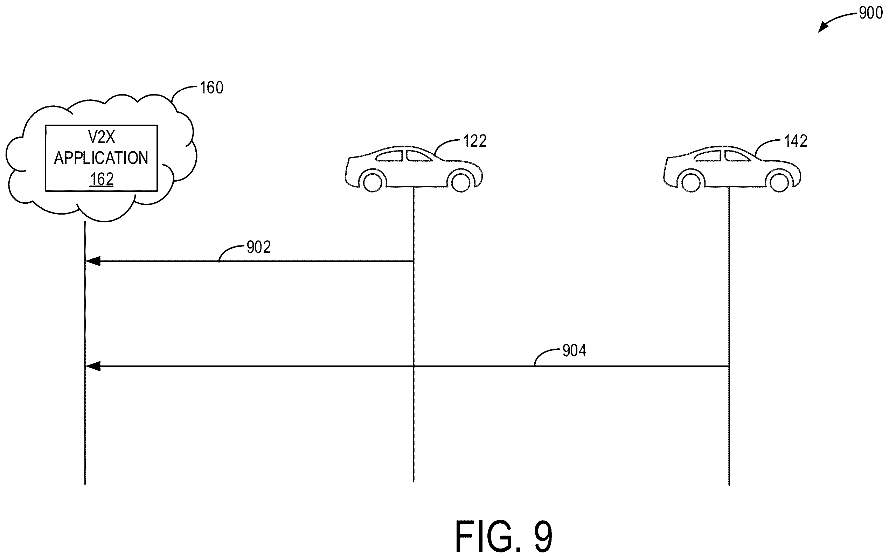

Turning briefly to FIG. 9, message transfer between vehicles and the network is shown in a diagram 900. As an example, the network 160, as described with respect to FIG. 1, via its V2X application 162, may receive a first message from LSR unit 122, as shown by arrow 902. At the same time, the network 160 may receive a second message from LR unit 142, as shown by arrow 904. The first message may include data therein that indicates the communication capabilities of the LSR unit 122, including both long range and short range capabilities. Similarly, the second message may include data therein that indicates the communication capabilities of the LR unit 142, including long range capabilities but not short range capabilities. As described above, in some examples, the messages may be transmitted via a uni-cast protocol wherein the single transmitter (e.g., the LR unit 142 or the LSR unit 122) transmits their message to the network 160.

Returning to FIG. 5, at 504, method 500 includes determining communication capabilities of each of the one or more vehicles. For example, based on the available communication modes or interface information encoded within each message, the V2X application may determine each vehicle's communication capabilities. Determining the communication capabilities of the one or more vehicles may include identifying a first subset of vehicles with short and long range communication capabilities, as noted at 506, and a second subset of vehicles with long range communication capabilities but not short range communication capabilities, as noted at 508. The first subset may thus include LSR units and the second subset may include LR units.

At 510, method 500 includes determining a position of each of the one or more vehicles. As described above, each message may include location information of the corresponding vehicle, including a latitude and longitude coordinate of a current position of the vehicle. The V2X application of the network may decode each message to extract the location information of each corresponding vehicle.

Based on the determined position, the method 500 may also include determining a region in which each vehicle corresponds, as noted at 512. As described above, a relatively large geographic location may be conceptually partitioned into a grid comprising a plurality of regions. Each region may be assigned a code, for example a Geohash code. Based on the latitude and longitude of a given vehicle extracted from the vehicle's message, the V2X application may derive the region and/or the code of the region in which the vehicle is located. The network may thus define one or more region in which the vehicles are located.

At 514, method 500 includes electing a collaborator vehicle from the first subset of vehicles within each region of the one or more regions defined when determining the regions of the vehicles based on vehicle locations. The collaborator may be elected randomly or via some algorithm executed by the V2X application. In some examples, the elected collaborator vehicle for each region may be different from a previously elected collaborator for the region or from any of the one or more regions (e.g., elected during an immediately previous iteration of the method 500) to avoid loading the same unit with the responsibility of being the collaborator for its region repeatedly.

At 516, method 500 includes sending a vehicle information request of short range capable vehicles (e.g., SR units) to each collaborator vehicle. As described, a collaborator may be elected for each of the one or more regions. A vehicle information request, in the form of a V2X message, may be transmitted from the V2X application of the network to the communication module of a given collaborator, wherein the vehicle information request includes a request for information of SR units within the region of the given collaborator. As will be described with respect to FIG. 6, upon reception of the vehicle information request, each collaborator vehicle may build a vehicle information package of relevant SR units within their region.

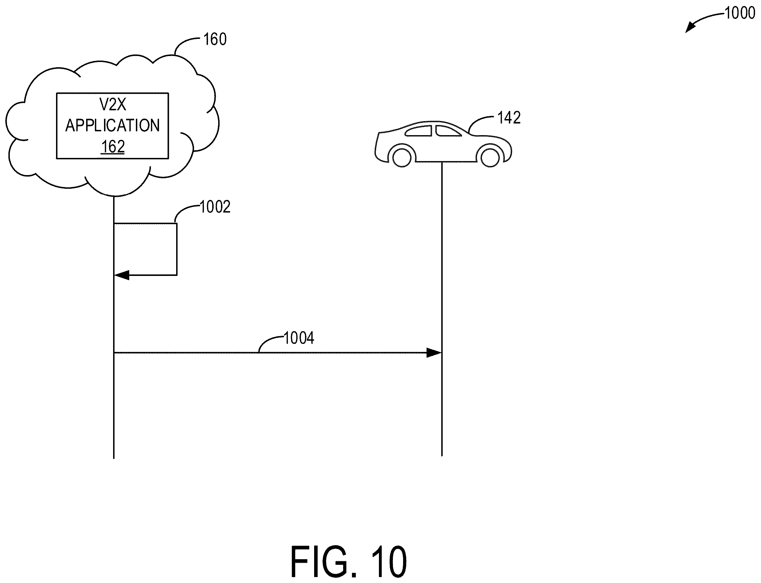

Turning briefly to FIG. 10, a diagram 1000 is shown. In the diagram 1000, the network 160, as described with respect to FIG. 1, determines vehicle positions as described above to derive the region of each vehicle. Then at a configured frequency, the network 160 may elect a collaborator vehicle for each of the regions, as noted by arrow 1002. Vehicle information requests are then transmitted to each elected collaborator vehicle. For example, LSR unit 122 may be elected as a collaborator unit for the region in which it is located. The network 160 may transmit a vehicle information request specific to that region to the LSR unit 122, as shown by arrow 1004. As described herein, the network 160 may transmit each vehicle information request per uni-cast protocol. For example, each vehicle information request is specific to its corresponding region and is transmitted to only the elected collaborator vehicle of the corresponding region.

Returning to FIG. 5, at 518, method 500 includes receiving a vehicle information package from each collaborator vehicle. Each vehicle information package may be received as a V2X message over the long range interface and may include vehicle information data of SR units within the region of the collaborator vehicle. The data of the SR units may include location data, communication interface data, fuel type, and more as is included in a V2X message transmitted from the SR units themselves. The network may thus receive one or more vehicle information packages, one from each of the elected collaborators.

At 520, method 500 includes transmitting the data of the vehicle information packages to vehicles in the second subset of vehicles (e.g., LR units). As an example, a first vehicle information package may be received from a first collaborator located in a first region. The network may then transmit the first vehicle information package to LR units. In some examples, the network may transmit the first vehicle information package to all LR units in the second subset of vehicles. In other examples, the network may transmit the first vehicle information package only to LR units located in the same region as the first collaborator vehicle. Additionally, the network may avoid transmitting vehicle information packages to LSR units because the LSR units may already receive messages directly from SR units via short-range communication protocols.

Thus, by transmitting vehicle information packages of SR unit data to LR units within the same region, transmission of duplicate messages may be mitigated. Mitigating duplicate messages may reduce data traffic for the LR units and LSR units as well as reducing processing power demands for the computing devices of the network and the LR and LSR units.

Turning now to FIG. 6, a flowchart illustrating a method 600 for generating a vehicle information package by an elected collaborator vehicle in a given region is shown. The method 600 may be executed by a V2X communication system, for example communication system 130 of computing system 124 of the LSR unit 122, based on instructions stored in memory, such as non-transitory memory 126 described with respect to FIG. 1. The method 600 is described herein with respect to a single collaborator vehicle within a single region, though it should be understood that multiple collaborator vehicles, one in each of a plurality of regions, may execute the method 600 at the same time. Further, it should be understood that while the method 600 is described with respect to collaborator vehicles, other types of collaborator units, such as infrastructure units, pedestrian mobile devices, and the like may also execute the method 600 without departing from the scope of this disclosure.

At 602, method 600 includes receiving short range V2X messages of vehicle data from one or more remote vehicles (RVs). The one or more RVs may include SR units and LSR units. Further, it should be understood that while RVs are herein referenced, other V2X capable entities, such as infrastructure units (e.g., road-side units) and pedestrian mobile devices may also transmit V2X messages over short range interfaces (e.g., via PC5 radio interfaces) without departing from the scope of this disclosure. The V2X messages may include vehicle data including location data (e.g., latitude and longitude), vehicle type, available communication capabilities, and the like as herein described.

At 604, method 600 includes receiving a vehicle information request from the network. The collaborator vehicle may be elected by the network as described with respect to FIG. 5. The collaborator vehicle may then receive the vehicle information request from the network, wherein the vehicle information request details a request for vehicle information data of SR units within the region of the collaborator vehicle.

At 606, method 600 includes creating a list of the one or more RVs. The one or more RVs may be arranged in a list for the collaborator vehicle to run through when compiling vehicle information of SR units.

At 608, method 600 determines if a selected RV is capable of short range communication only. Determining if the selected RV is short range only may thus determine whether the selected RV is a SR unit or an LSR unit. For example, a message may be received from the selected RV over the short range interface, thus indicating that the RV is one of an SR unit and an LSR unit, but not an LR unit. In some examples, the message may also include alternate interface information, which indicates that the RV is capable of transmitting and receiving messages via a long range interface as well. In other examples, the message may not include alternate interface information, indicating that the selected RV is only capable of short range communication. If the selected RV is only capable of short range communication (YES at 608), such as when the selected RV is an SR unit, the method 600 proceeds to 612. If the selected RV is also capable of long range communication (NO at 608), such as when the selected RV is an LSR unit, method 600 proceeds to 610.

At 610, the selected RV is filtered out. Filtering out the selected RV may preclude the vehicle information data of the selected RV from being included in a vehicle information package that will be sent to the network. In particular, when the selected RV is also capable of communicating via a long range interface, it already is in communication with the network, and thus LR units. Thus, by filtering out message data of LSR units, duplicate messages being transmitted to the network may be mitigated. Following 610, method 600 proceeds to 620.

At 612, when the selected RV is only capable of short range communication, the method 600 includes identifying a region of the selected RV. Similar to as described with respect to FIG. 5, the collaborator vehicle, for example via instructions stored its communication module, may decode the message received from the selected RV to extract location/position data such as latitude and longitude. Based on the location data, a region and region code may be identified for the selected RV.

In some examples, identifying the region of the selected RV may include extrapolating the region from the received message data. For example, the received message data from the selected RV may include a location with a timestamp, a direction and speed of travel, an acceleration, and the like as part of a standard V2X message. Based on this information, the collaborator vehicle may extrapolate a current location of the selected RV. For example, the message data may indicate a location at a first time and the collaborator vehicle may process the message data to determine the current location at a second, later time. The second, later time may be 200 ms, 500ms, 1 second, or other time after the first time due to processing and transmission lag. Thus, data each of the one or more RVs from which messages are received may be brought into the same time instant. Thus, the collaborator vehicle may determine which RVs are within the same region at the time instant rather than based on just the location that is embedded in the message data, which may be outdated, even if ever so slightly. For example, RVs may have crossed the boundaries between regions between the first and second times and the collaborator vehicle may build its information package based on the most up to date information (e.g., the extrapolated position at the second time).

At 614, method 600 includes determining if the region of the selected RV matches the region of the collaborator vehicle. The collaborator vehicle may receive V2X messages via short range interfaces from RVs within a predefined distance range of the collaborator vehicle's location, for example within a 1 km radius. The range of the short range interfaces may extend into multiple regions. For example, each region may correspond to a smaller footprint than the range of the short range interfaces. As a non-limiting example, the square footage of each region (e.g., grid quadrant) may be less than 0.5 km² such that in any direction a range of the short range interface extends past at least one grid quadrant border. In this way, the one or more RVs from which the collaborator vehicle receives messages may reside in regions that may or may not be the same region in which the collaborator vehicle is located. If the region of the selected RV matches the region of the collaborator vehicle (YES at 614), method 600 proceeds 618. If the region of the selected RV does not match the region of the collaborator vehicle (NO at 614), method 600 proceeds to 616.

At 616, the selected RV is filtered out. To reiterate, filtering out the selected RV may preclude the vehicle information data of the selected RV from being included in a vehicle information package that will be sent to the network. In particular, when the selected RV is in a different region than the collaborator vehicle, the vehicle information of the selected RV may be transmitted to the network via a second, different collaborator vehicle (e.g., the second collaborator vehicle being within the same region as the selected RV). Thus, the vehicle information of the selected RV may be sent to the network only once by the second collaborator vehicle within its matching region, thereby mitigating transmission of duplicate data. Following 616, method 600 proceeds to 620.

At 618, when the selected RV is located in the same region as the collaborator vehicle, the method 600 includes adding the vehicle data to the vehicle information package. The vehicle information package may include data of SR units within the same region as the collaborator vehicle as described herein.

At 620, following addition of vehicle data to the vehicle information package or filtering out of the selected RV, method 600 includes determining if all the RVs in the list of RVs have been checked and either added to the vehicle information package or filtered out. If additional RVs remain in the list unchecked (NO at 620), the method 600 returns to 608 to repeat the steps described above for a next selected RV in the list. Thus, the steps for determining whether to filter out an RV or add data thereof to the vehicle information package may be repeated for each of the one or more RVs in the list. Once all the RVs have been checked (YES at 620), method 600 proceeds to 622.

At 622, method 600 includes transmitting the vehicle information package to the network. The vehicle information package, once all the RVs have been checked and either filtered out or data thereof added to the package, may thus include all data of SR units within the particular region. The vehicle information package may be transmitted to the network via a long range interface through which the collaborator vehicle communicates with the network.

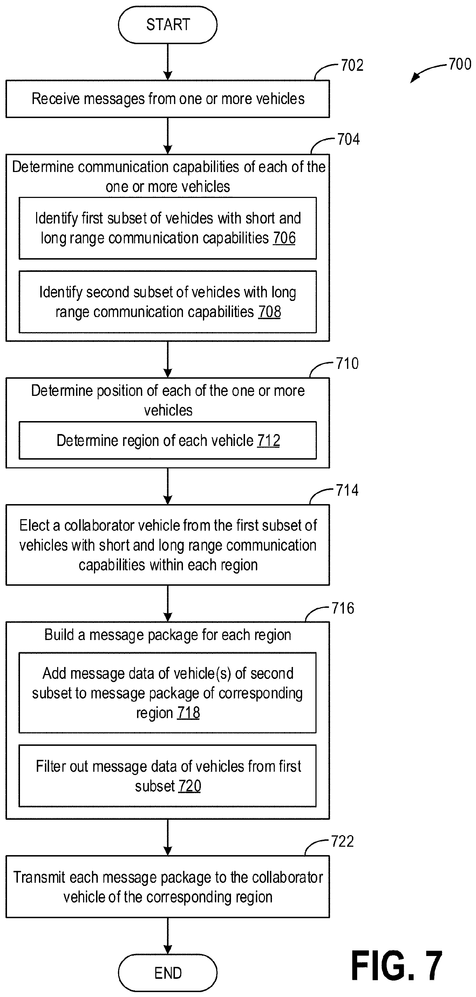

Referring now to FIG. 7, a flowchart illustrating a method 700 for forwarding V2X messages by a network, such as a cloud computing network is shown. The method 700 may be executed by a V2X communication application, such as V2X application 162 of network 160 described with respect to FIG. 1, for example based on instructions stored in memory thereof. The V2X application 162 may be in communication with one or more remote devices, including LSR units and LR units, via long range interface(s). Further, it should be understood that while the SR units, LSR units and LR units are herein described as vehicles, other types of V2X capable units are possible without departing from the scope of this disclosure.

At 702, method 700 includes receiving messages from one or more vehicles. The one or more vehicles may be vehicles capable of long range communication, such as LR units and LSR units. The messages may be received by the network via the long range interface (e.g., via V2N). Each message may include information about a location of the transmitting vehicle, such as a latitude and longitude of the vehicle and the available communication modes (e.g., interface information) thereof. In some examples, the message may also include information about speed, direction of travel, fuel type, and more. The V2X application of the network may be configured to decode the messages received from the one or more vehicles in order to extract information from the messages.

At 704, method 700 includes determining communication capabilities of each of the one or more vehicles. For example, based on the available communication modes or interface information encoded within each message, the V2X application may determine each vehicle's communication capabilities. Determining the communication capabilities of the one or more vehicles may include identifying a first subset of vehicles with short and long range communication capabilities, as noted at 706, and a second subset of vehicles with long range communication capabilities but not short range communication capabilities, as noted at 708. The first subset may thus include LSR units and the second subset may include LR units.

At 710, method 700 includes determining a position of each of the one or more vehicles. As described above, each message may include location information of the corresponding vehicle, including a latitude and longitude coordinate of a current position of the vehicle. The V2X application of the network may decode each message to extract the location information of each corresponding vehicle.

Based on the determined position, the method 700 may also include determining a region in which each vehicle corresponds, as noted at 712. As described above, a relatively large geographic location may be conceptually partitioned into a grid comprising a plurality of regions. Each region may be assigned a code, for example a Geohash code. Based on the latitude and longitude of a given vehicle extracted from the vehicle's message, the V2X application may derive the region and/or the code of the region in which the vehicle is located. The network may thus define one or more regions in which the vehicles are located.

Similar to as described with respect to FIG. 6, determining the position of each of the one or more vehicles may include extrapolating a current location based on the received message data (and thus a current region of each vehicle). For example, a V2X message received by the network from an LR unit may include a timestamped location, a direction and speed of travel, an acceleration, and the like. Based on this data, the V2X application of the network may extrapolate the current location of the LR unit. This may be done for each of the one or more vehicles, thus bringing the received data into the same time instant.

At 714, method 700 includes electing a collaborator vehicle from the first subset of vehicles within each region of the one or more regions defined when determining the regions of the vehicles based on vehicle locations. The collaborator may be elected randomly or via some algorithm executed by the V2X application. In some examples, the elected collaborator vehicle for each region may be different from a previously elected collaborator for the region or from any of the one or more regions (e.g., elected during an immediately previous iteration of the method 700) to avoid loading the same unit with the responsibility of being the collaborator for its region repeatedly.

At 716, method 700 includes building a message package for each of the one or more regions. Building the message package may include adding message data of vehicle(s) of the second subset of vehicles to the message package of a corresponding region, as noted at 718. Thus, information of LR unit within a given region may be added to a message package for that region. Building the message package may also include filtering out message data of vehicles from the first subset, as noted at 720. For example, data of LSR units may be filtered out and not added to message packages as LSR units may already be in communication with SR units and thus the data of the LSR units may already be transmitted to SR units within range of their short range interfaces. Thus, filtering out data of LSR units may mitigate transmission of duplicate messages.

At 722, method 700 includes transmitting each message package to the collaborator vehicle of the corresponding region. As described, a collaborator vehicle may be elected for each of the one or more regions based on the derived regions of the vehicles. A message package may then be built for each of the one or more regions and the network may transmit each message package to the collaborator vehicle within the corresponding region.

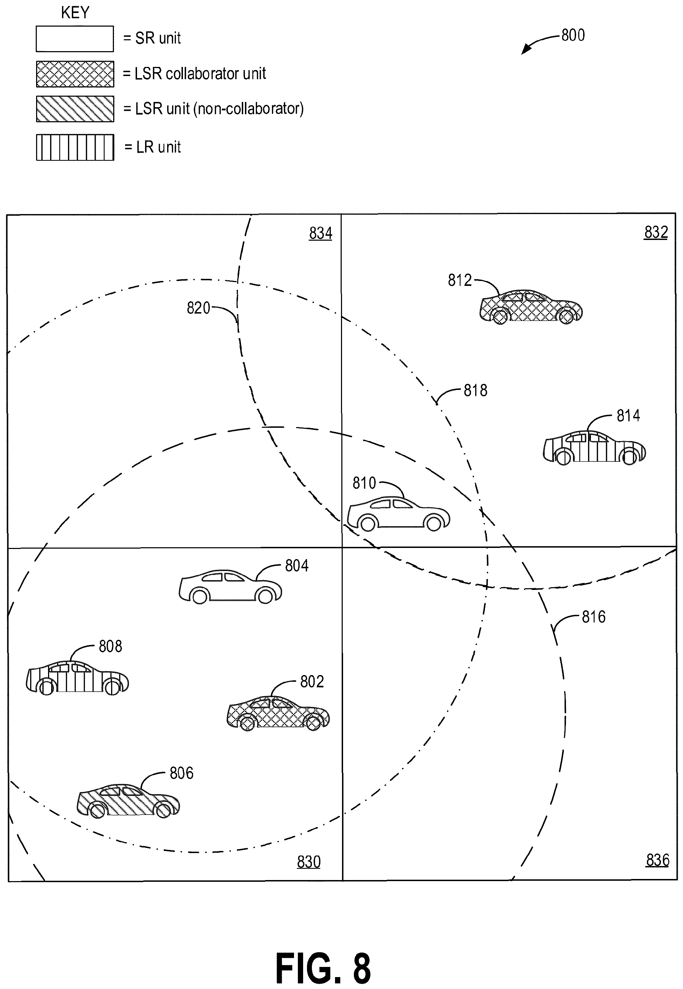

As will be described below with respect to the example scenario shown in FIG. 8, each collaborator vehicle may then transmit the message package to vehicles within short range communication range. In some examples, a collaborator vehicle may broadcast the message package to any unit capable of short range communication.

In some examples, the method 500 and the method 700 may be combined into a single method in practice. For example, messages may be received by the network from vehicles, processed to identify LSR vehicles vs LR vehicles, each vehicle may be assigned to a particular region (e.g., assign a region code to each vehicle), and a collaborator may be elected for each given region. Then, a vehicle information request may be sent to the collaborator of a given region (as described at 516) at the same time or substantially at the same time as the built message package is transmitted to that collaborator for that given region (as described at 722). In this way, processing demands of the network may be reduced as the same received messages may be used for forwarding of SR unit messages to LR units and forwarding LR unit messages to SR units.

The methods herein may be performed repeatedly in an iterative fashion. For example, the methods 500 and 700 for the network may be performed at predefined frequencies or intervals, for example every 5 seconds, so as to allow for V2X message forwarding from units with incompatible communication capabilities at regular intervals, thereby expanding the range V2X communications.

Turning now to FIG. 8, a diagram of a V2X communication scenario 800 is shown. In the V2X communication scenario 800 message data may be transmitted in accordance with one or more of the methods herein disclosed. While the units herein described are shown in FIG. 8 as vehicles, it should be understood that other types of units are possible without departing from the scope of this disclosure.

A first collaborator LSR unit 802, a first SR unit 804, a first non-collaborator LSR unit 806, and a first LR unit 808 may be located within a first region 830. A second SR unit 810, a second collaborator LSR unit 812, and a second LR unit 814 may be located with a second region 832. The first collaborator LSR unit 802, the first non-collaborator LSR unit 806, the first LR unit 808, the second collaborator LSR unit 812, and the second LR unit 814 may be capable of communicating with a network via a long-range (e.g., Uu) interface. The first collaborator LSR unit 802 may be capable of broadcasting and receiving V2X messages via a short-range interface (e.g., PC5) within a first range 816. Similarly, the first SR unit 804 may be capable of broadcasting and receiving V2X messages via a short-range interface within a second range 818. The second collaborator LSR unit 812 may be capable of broadcasting and receiving V2X messages via a short-range interface within a third range 820.

In the example scenario 800, the first collaborator LSR unit 802 may have been selected by the network for the first region 830 and the second collaborator LSR unit 812 may have been selected by the network for the second region 832. Each of the first collaborator LSR unit 802 and the second collaborator LSR unit 812 may receive a vehicle information request from the network, as described with respect to the method of FIG. 5.

During message forwarding of messages from SR units to LR units, as is described in the method of FIG. 6, the first collaborator LSR unit 802 may receive message data via the short-range interface within the first range 816. This may include message data from the first SR unit 804, the second SR unit 810, and the first non-collaborator LSR unit 806. The first collaborator LSR unit 802 may then filter the received message data, filtering out message data from the first non-collaborator LSR unit 806 because it is already connected to the network and filtering out message data from the second SR unit 810 because it is in a different region (e.g., the second region 832). Then, message data of the first SR unit 804 may be added to a vehicle information package and transmitted back to the network for forwarding to the first LR unit 808 within the first region 830. A similar method for filtering and transmission of a vehicle information package by the second collaborator LSR unit 812 may occur concurrently wherein data of SR units in different regions (e.g., the first SR unit 804) and LSR units are filtered out. A second vehicle information package built by the second collaborator LSR unit 812 may be transmitted back to the network and forwarded to the second LR unit 814 within the second region 832.

In this way, by filtering by communication capability and current location, duplicate messages being sent to the network may be mitigated. Thus, overall traffic for incoming data to the network and incoming data to LSR units may be reduced, therefore reducing demanded processing power and processing time of the network.

During message forwarding of messages from LR units to SR units, as is described with respect to FIG. 7, the network may filter its received messages and build respective message packages to be sent to the first and second collaborator LSR units 802, 812. For example, the network may receive messages from the first collaborator LSR unit 802, the first non-collaborator LSR unit 806, the first LR unit 808, the second LR unit 814, and the second collaborator LSR unit 812. The network may then build a first message package for the first region 830 by filtering out data from the first collaborator LSR unit 802 and the first non-collaborator LSR unit 806, while including message data from the first LR unit 808. The network may also build a second message package for the second region 832 by filtering out message data from the second collaborator LSR unit 812 and including message data from the second LR unit 814. The first message package may be transmitted to the first collaborator LSR unit 802 and the second message package may be transmitted to the second collaborator LSR unit 812.

To forward the message packages, the first collaborator LSR unit 802 may broadcast data from the first message package via its short-range interface. Thus, the first collaborator LSR unit 802 may broadcast the data of the first message package to all short range capable units within the first range 816. In the example scenario 800, data of the first message package may be transmitted to the first SR unit 804, the first non-collaborator LSR unit 806, and the second SR unit 810. Concurrently, the second collaborator LSR unit 812 may broadcast data from the second message package to all short range capable units within the third range 820. In the example scenario 800, data of the first message package may be transmitted to the second SR unit 810.

The range of the short-range interface may overlap borders of specified regions (e.g., Geohashes) because the range may be larger than the longest distance of any given region. For example, the first range 816 may extend not only into the first region 830 in which the first collaborator LSR unit 802 is located, but also into the second region 832, a third region 834, and a fourth region 836 (and/or other regions not shown in FIG. 8). Similarly, the third range 820 may extend not only into the second region 832 in which the second collaborator LSR unit 812 is located, but also into the third region 834 and the fourth region 836 (and/or other regions not shown in FIG. 8).

In this way, the second SR unit 810 may receive data of the first message package from the first collaborator LSR unit 802 as well as data of the second message package from the second collaborator LSR unit 812 as the second SR unit 810 is located within the first range 816 of the first collaborator LSR unit 802 and within the third range 820 of the second collaborator LSR unit 812. Thus, SR units may receive vehicle information from more than one region (e.g., Geohash) based on their locations and the location of the collaborator unit that is broadcasting the data. As previously discussed, the message packages may be transmitted as standard V2X messages, such as BSMs, to share information such as sensor information, or in other examples may transmit other types of messages like TIMs when the message package includes other types of data (e.g., insight data).

The technical effect of the systems and methods herein described is that interoperability between units capable of only short range communication and units capable of only long range communication may be achieved. By use of hybrid units capable of both short and long range communication and a connected network, messages may be forwarded from SR units to LR units and from LR units to SR units. Further, by performing message forwarding in specific regions (e.g., Geohashes) and extrapolating current positions of units to determine which region each unit is located in at a particular time instant, duplicate messages being transmitted to and therefore processed by the network and specific units may be mitigated. Mitigating duplicate messages may reduce traffic for the network as well as reduce the processing demands and therefore processing time of both the network and receiving units.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, hardware network interfaces/antennas, switches, actuators, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," and so on. are used merely as labels, and are not intended to impose numerical requirements or a particular positional order on their objects. The following claims particularly point out subject matter from the above disclosure that is regarded as novel and non-obvious.

## Claims

1. A system, comprising:
a network comprising a Vehicle-to-Everything (V2X) application;
one or more short range capable units (SR units) each comprising a first V2X communication system configured for short range communication;
one or more long and short range capable units (LSR units) each comprising a second V2X communication system configured for both short range communication and long range communication; and
one or more long range capable units (LR units) each comprising a third V2X communication system configured for long range communication, wherein the network is configured to transmit V2X messages to and receive V2X messages from the one or more LSR units and the LR units via long range interfaces and the SR units are configured to transmit V2X messages to and receive V2X messages from the LSR units via a short range interface, wherein the one or more LSR units and the network are together configured to forward message data from the one or more SR units to the one or more LR units and from the one or more LR units to the one or more SR units based on identified locations of the one or more SR units, elected collaborator units of the one or more LSR units, and the one or more LR units.

2. The system of claim 1, wherein, to forward message data from the one or more SR units to the one or more LR units, the V2X application of the network is configured to:
elect a collaborator unit of the one or more LSR units for each of a plurality of regions;
send a vehicle information request to each collaborator unit;
receive a vehicle information package from each collaborator unit comprising message data of a subset of the one or more SR units located in the same region as the collaborator unit; and
transmit each vehicle information package to the one or more LR units.

3. The system of claim 2, wherein each of the plurality of regions is a Geohash.

4. The system of any preceding claim, wherein, to forward message data from the one or more SR units to the one or more LR units, the second V2X communication system of an elected collaborator unit of the one or more LSR units for a given region of a plurality of regions is configured to:
receive a vehicle information request from the V2X application of the network;
receive message data from one or more of the one or more SR units and one or more of the one or more LSR units within a range of the short range interface of the elected collaborator via short range communication;
generate a vehicle information package comprising message data of a first subset of the one or more of the one or more SR units, wherein the subset of the one or more of the one or more SR units are located in the given region, by filtering out data of the one or more of the one or more LSR units and of a second subset of the one or more of the one or more SR units not located in the given region; and
transmit the vehicle information package to the network via long range communication.

5. The system of claim 4, wherein the second V2X communication system of the elected collaborator unit is further configured to determine the given region of each of the one or more SR units from which message data is received by extrapolating a current location based on a timestamped location, a direction of travel, and a speed of travel included in a corresponding message therefrom.

6. The system of claim 5, wherein the second V2X communication system of the elected collaborator unit is further configured to determine the current location of each of the one or more SR units for a single time instant and wherein identifying the region of each of the one or more SR units is based on the current location for the single time instant.

7. The system of any preceding claim, wherein, to forward message data from the one or more LR units to the one or more SR units, the V2X application of the network is configured to:
receive message data from the one or more LR units and the one or more LSR units;
elect a collaborator unit of the one or more LSR units for each of a plurality of regions;
build a message package for each of the plurality of regions comprising message data from one or more of the one or more LR units located in the corresponding region; and
transmit each message package to the collaborator unit for the corresponding region.

8. The system of any preceding claim, wherein, to forward message data from the one or more LR units to the one or more SR units, the second V2X communication system of an elected collaborator unit of the one or more LSR units for a given region of a plurality of regions is configured to:
receive a message package from the V2X application of the network via long range communication;
broadcast the message package to one or more of the one or more SR units and one or more of the one or more LSR units that are within a predefined range of the short range interface of the elected collaborator unit via short range communication.

9. The system of any preceding claim, wherein each of the message data comprises at least a timestamped location, a direction of travel, and a speed of travel.

10. The system of any preceding claim, wherein the one or more SR units, the one or more LSR units, and the one or more LR units comprise one or more of vehicles, infrastructure units, and mobile devices.
